# EUROPÄISCHE PATENTANMELDUNG

(11) **EP 1 302 891 A1**
(43) Veröffentlichungstag der Anmeldung: **16.04.2003**
(21) Anmeldenummer: 01124524.8
(22) Anmeldetag: 12.10.2001
(51) Int. Cl.: G06K 9/24, G06K 11/18

(54) **Vorrichtung zum Erfassen und Darstellen von Bewegungen**

(71) Anmelder: SIEMENS AKTIENGESELLSCHAFT, 80333 München (DE)
(72) Erfinder: Blaimberger, Frank, 82335 Berg-Hoehenrain (DE); Jarczyk, Alexander, Dr., 85356 Freising (DE); Schneider-Hufschmidt, Matthias, Dr., 80997 München (DE)

(57) **Zusammenfassung**

Die Erfindung betrifft eine Vorrichtung 1 (10; 110; 210; 310) zum Erfassen und Darstellen von Bewegungen, umfassend:
- Positionserfassungsmittel (24; 125) zum Erfassen der gegenwärtigen Position eines Bezugspunkts (16; 116; 216; 316) der Vorrichtung (10; 110; 210; 310),
- Datenverarbeitungsmittel (32) zum Verarbeiten von mit den Positionserfassungsmittel (25; 125) erfassten Positionsdaten und
- Projektionsmitteln (21; 121) zum Projizieren eines Projektionsbildes (28; 30) der erfassten und verarbeiteten Positionsdaten auf eine Oberfläche (XY-Ebene),
wobei die Datenverarbeitungsmittel (32) eine Änderung der gegenwärtigen Position des Bezugspunktes (16; 116; 216; 316) derart berücksichtigen, dass das Projektionsbild (28, 30) auf der Oberfläche (XY-Ebene) im Wesentlichen orts- und lagestabil bleibt.

## Beschreibung

Die vorliegende Erfindung betrifft eine Vorrichtung zum Erfassen und Darstellen von Bewegungen.

Eine derartige Vorrichtung ist - ausgeführt als Mobilfunk-Endgerät - beispielsweise aus der EP 907 278 A3 bekannt. Die Vorrichtung gemäß diesem Stand der Technik umfasst einen stiftförmigen Gegenstand, mittels welchem auf einer Oberfläche bestimmte Bewegungen ausgeführt werden können, beispielsweise Schreibbewegungen. Die Bewegungen werden mittels eines Bewegungssensors erfasst und anschließend analysiert, so dass mit der Vorrichtung geschriebene Zeichen ermittelt werden können und durch Funkübertragung oder dergleichen weiterverarbeitet werden können. Die Vorrichtung gemäß diesem Stand der Technik hat jedoch den Nachteil, dass sie verhältnismäßig unkomfortabel zu bedienen ist, insbesondere deshalb, weil der Benutzer die von ihm mit der stiftförmigen Vorrichtung virtuell geschriebene Information nicht unmittelbar sieht.

Ferner ist aus dem Stand der Technik (siehe beispielsweise http:\\www.anoto.com) eine Vorrichtung unter der eingetragenen Marke "Anoto" bekannt, welche wie ein herkömmlicher Stift zum Beschreiben einer Papierunterlage mit einer Tintenzuführung versehen ist. Die Papierunterlage ist mit einem besonderen Muster bedruckt. Der Stift umfasst ferner nahe seiner Schreibspitze eine Kamera, welche die Stiftbewegung anhand des auf dem Papier aufgedruckten Musters analysiert und aufzeichnet. Diese Vorrichtung hat den Nachteil, dass sie einerseits so ausgelegt werden muss, dass die von der Kamera erzeugten großen Datenmengen verarbeitet werden können, was einen großen Aufwand hinsichtlich der Datenverarbeitung erfordert. Andererseits funktioniert diese Vorrichtung lediglich mit dem jeweils zugehörigen gemusterten Papier, was deren Einsatz erschwert.

Es ist demgegenüber eine Aufgabe der vorliegenden Erfindung, eine Vorrichtung der eingangs bezeichneten Art bereitzustellen, welche bei einfacher und komfortabler Bedienung und bei gleichzeitiger Darstellung der ausgeführten Bewegungen eine zuverlässige Bewegungserfassung ermöglicht.

Diese Aufgabe wird durch eine Vorrichtung zum Erfassen und Darstellen von Bewegungen gelöst, umfassend:
- Positionserfassungsmittel zum Erfassen der gegenwärtigen Position eines Bezugspunkts der Vorrichtung,
- Datenverarbeitungsmittel zum Verarbeiten von mit den Positionserfassungsmittel erfassten Positionsdaten und
- Projektionsmitteln zum Projizieren eines Projektionsbildes der erfassten und verarbeiteten Positionsdaten auf eine Oberfläche,
wobei die Datenverarbeitungsmittel eine Änderung der gegenwärtigen Position des Bezugspunktes derart berücksichtigen, dass das Projektionsbild auf der Oberfläche im wesentlichen orts- und lagestabil bleibt.

Die Vorrichtung ist derart ausgebildet, dass sie ohne zusätzliche Hilfsmittel, wie beispielsweise gemustertes Papier, durch die Positionserfassungsmittel die gegenwärtige Position des Bezugspunkts der Vorrichtung sowie die Veränderungen dieser Position erfasst und durch die Datenverarbeitungsmittel die erfassten Positionsdaten verarbeitet. Die Positionsdatenerfassung kann beispielsweise derart erfolgen, dass die Vorrichtung auf einer im Wesentlichen ebenen Oberfläche bewegt wird, wobei die Ebene durch zwei Achsen eines Koordinatensystems, beispielsweise die X- und die Y-Achse aufgespannt wird, und wobei die dritte Achse im Wesentlichen orthogonal zu dieser Ebene steht. Die Bewegungserfassung kann dann durch Erfassung der Änderungen der jeweiligen X-, Y- und Z-Koordinaten erfolgen. Die während der Bewegung der Vorrichtung erfassten Positionsdaten werden dann nach der Verarbeitung über die Projektionsmittel als sichtbares Projektionsbild auf die Oberfläche projiziert, so dass der Benutzer auf Grund der Projektion der erfassten und verarbeiteten Positionsdaten auf der Oberfläche den Eindruck erhält, dass er während der von ihm ausgeführten Bewegungen auf der Oberfläche beispielsweise Tinte hinterlassen hat. Tatsächlich handelt es sich jedoch um ein "virtuelles Schreiben", da das Projektionsbild nach Entfernen der Vorrichtung von der Oberfläche mit entfernt wird.

Ein wesentlicher Aspekt der Erfindung liegt darin, dass die gegenwärtige Bewegung der erfindungsgemäßen Vorrichtung bei der Projektion der erfassten und verarbeiteten Positionsdaten auf der Oberfläche kompensiert wird, so dass das Projektionsbild auf der Oberfläche im Wesentlichen orts- und lagestabil bleibt. Es ist darauf hinzuweisen, dass sich zwar die Projektionsmittel mit der erfindungsgemäßen Vorrichtung während der Bewegung auf der Oberfläche mitbewegen, diese Bewegung der Projektionsmittel jedoch von den Datenverarbeitungsmitteln für die Projektion der Projektionsdaten auf die Oberfläche durch die vorstehend angesprochene Kompensation eliminiert wird. Dadurch ist es möglich, dass ein Benutzer der erfindungsgemäßen Vorrichtung auf einer Oberfläche Schreibbewegungen ausführt, wobei diese Schreibbewegungen in Echtzeit erfasst und durch Projektion auf der Oberfläche dargestellt werden, so dass der Benutzer den Eindruck erhält, er würde tatsächlich auf der Oberfläche schreiben oder zeichnen. Ein wesentlicher Vorteil dieser Erfindung liegt darin, dass für deren Verwendung keine Zusatzhilfsmittel, wie beispielsweise zusätzliches Papier erforderlich ist, und dass die vollzogenen Bewegungen durch das Projektionsbild dem Benutzer sichtbar dargestellt werden.

In einer Weiterbildung der Erfindung kann vorgesehen sein, dass diese in Form eines Stiftes ausgeführt ist. Dadurch ist die Erfindung sehr handlich und einfach über die Oberfläche zu bewegen.

Ferner kann vorgesehen sein, dass der Bezugspunkt von einer Stiftspitze, insbesondere von einer druckstabilisierten Stiftspitze, gebildet ist. Auch diese Ausführungsform ermöglicht eine intuitiv einfache Nutzung der erfindungsgemäßen Vorrichtung, da ein Benutzer die Vorrichtung wie einen herkömmlichen Stift nutzen kann, wobei die maßgeblichen Bewegungen mit der Stiftspitze ausgeführt werden. Die Druckstabilisierung kann die Lebensdauer der erfindungsgemäßen Vorrichtung verlängern. Beispielsweise kann die Stiftspitze mit einem gleitgünstigem und verschleißarmen Material ausgebildet sein.

Um eine hinreichend gute Positionserfassung bei der als Stift mit Stiftspitze ausgeführten erfindungsgemäßen Vorrichtung zu gewährleisten, kann in einer Weiterbildung der Erfindung vorgesehen sein, dass die Positionserfassungsmittel oder/und die Projektionsmittel an einer der Stiftspitze nahen Stelle der Vorrichtung angeordnet sind.

Hinsichtlich der Positionserfassungsmittel kann vorgesehen sein, dass diese mit wenigstens einem optischen Sensor oder/und mit wenigstens einem mechanischen Sensor oder/und mit wenigstens einem Beschleunigungssensor, oder/und mit einer Kombination dieser Sensoren ausgeführt sind. Es ist darauf zu achten, dass der wenigstens eine Sensor bzw. die Kombination von Sensoren derart ausgebildet ist, dass zumindest Bewegungen auf der Oberfläche, also in der X-Y-Ebene, vorzugsweise auch Bewegungen orthogonal zu der Oberfläche, also entlang der Z-Achse, erfasst werden. In einer Weiterbildung der Erfindung kann darüber hinaus vorgesehen sein, dass auch Rotationsbewegungen um eine zur Oberfläche orthogonale Achse, also um eine zur Z-Achse parallele Achse, erfasst werden können.

Hinsichtlich des wenigstens einen optischen Sensors kann vorgesehen sein, dass dieser als optischer Bewegungssensor zur Erfassung einer translatorischen Bewegung des Bezugspunktes ausgeführt ist. Ferner kann vorgesehen sein, dass der wenigstens eine optische Sensor zur Erfassung einer rotatorischen Bewegung um eine sich durch den Bezugspunkt erstreckende Achse ausgeführt ist. Die Verwendung eines optischen Sensors hat den Vorteil, dass dieser berührungslos arbeitet und somit dessen Funktionsweise auch nicht durch Verschmutzung oder mechanische Abnutzung bzw. Beschädigung beeinträchtigt wird. Ferner weisen optische Sensoren einen niedrigen Stromverbrauch auf, so dass für den Fall, dass die Vorrichtung autark mit einem Akkumulator ausgeführt ist, die Bereitschaftszeit des Akkumulators durch den wenigstens einen optischen Sensor nicht nennenswert reduziert wird.

Hinsichtlich der Positionserfassungsmittel kann weiter vorgesehen sein, dass für die Verwendung eines mechanischen Sensors dieser als Rollsensor zur Erfassung einer Abrollbewegung auf der Oberfläche ausgeführt ist. Rollsensoren sind kostengünstig und technisch ausgereift verfügbar. Es ist jedoch darauf zu achten, dass bei Verwendung eines Rollsensors stets ein mechanischer Kontakt mit hinreichend hohem Anpressdruck zwischen der erfindungsgemäßen Vorrichtung und der Oberfläche erfolgen muss, damit der Rollsensor zuverlässig die ausgeführten Bewegungen erfassen kann.

Verwendet man einen Beschleunigungssensor im Rahmen der Positionserfassungsmittel, so kann in einer Weiterbildung der Erfindung vorgesehen sein, dass dieser als Drehwinkel-Beschleunigungssensor oder als Longitudinal-Beschleunigungssensor zur Erfassung einer Beschleunigung des Bezugspunktes der Vorrichtung ausgeführt ist.

Ferner ist es möglich, wie vorstehend bereits angesprochen, verschiedene hybride Kombinationen der vorstehend angesprochenen Sensortypen zu verwenden, beispielsweise eine Kombination aus einem Roll- oder optischen Sensor ohne Rotationserfassung um die Z-Achse oder eine dazu parallele Achse sowie einem Drehwinkel-Beschleunigungssensor zur zusätzlichen Erfassung der Rotation um die Z-Achse.

Eine besonders einfache Ausgestaltung der Datenverarbeitungsmittel ergibt sich beispielsweise dann, wenn diese einen Mikroprozessor umfassen, in welchem sämtliche Schritte zur Datenverarbeitung ausgeführt werden können. Gewünschtenfalls kann der Mikroprozessor konfigurierbar sein, so dass die erfindungsgemäße Vorrichtung an bestimmte Bedürfnisse des Benutzers anpassbar ist.

Hinsichtlich der Projektionsmittel kann vorgesehen sein, dass diese mit wenigstens einem Laserprojektor ausgeführt sind. Der Laserprojektor kann in einer einfacheren Ausführung der erfindungsgemäßen Vorrichtung als monochromer Laserprojektor ausgebildet sein. Bei einer komfortableren Ausführung kann der Laserprojektor auch mehrfarbige Projektionsbilder erzeugen. Hinsichtlich der Anordnung des Laserprojektors gibt es im Gegensatz zu den Bewegungserfassungsmitteln, welche möglichst nahe dem Bezugspunkt der erfindungsgemäßen Vorrichtung anzuordnen sind, unterschiedliche Möglichkeiten. Führt man den Laserprojektor beispielsweise in miniaturisierter Form aus, so ist es möglich, diesen ebenfalls nahe des Bezugspunktes, in dem vorstehend angesprochenen Ausführungsbeispiel nahe der Stiftspitze, anzubringen. Dies hat den Vorteil, dass die Projektion unter Vermeidung raumgreifender Strahlengänge unmittelbar in der Nähe der Oberfläche erfolgen kann, auf welche das Projektionsbild projiziert werden soll. Dadurch können Schattenbereiche innerhalb des Projektionsbildes weitgehend unterdrückt werden. In diesem Zusammenhang ist jedoch darauf hinzuweisen, dass der Laserprojektor möglichst derart anzubringen ist, dass die durch einen Schattenwurf der Stiftspitze erzeugten Schattenbereiche möglichst nicht in dem Bereich liegen, in welchem aktuelle Positionsdaten einer gerade erfolgten Bewegung der erfindungsgemäßen Vorrichtung dargestellt werden. Stattdessen sollten durch die Spitze geworfene Schattenbereiche innerhalb der von dem Laserprojektor erzeugten Projektionsfläche einer Bewegung der erfindungsgemäßen Vorrichtung "vorauseilen". Ferner ist zu beachten, dass der Laserprojektor derart an der erfindungsgemäßen Vorrichtung anzubringen ist, dass er selber in möglichst geringem Maße Teile der sichtbaren Projektionsfläche, insbesondere des Projektionsbildes abdeckt.

Möchte man den Laserprojektor allerdings nicht nahe dem Bezugspunkt, insbesondere der Stiftspitze, anordnen, beispielsweise deshalb, weil der Laserprojektor nicht als miniaturisierter Laserprojektor ausgeführt werden soll oder weil ein Einschränkung der Sicht auf die Projektionsfläche ("Sicht-schattens") vermieden werden soll, so ist es möglich, dem Laserprojektor ein optisches Übertragungssystem, insbesondere eine Linsenanordnung oder/und Lichtleitmittel oder/und Spiegelanordnungen oder dergleichen, zur Projektion des Projektionsbildes auf die Oberfläche zuzuordnen. Durch das optische Übertragungssystem können die für die Projektion erforderlichen Strahlengänge von dem Laserprojektor zu der als Projektionsschirm dienenden Oberfläche übertragen werden. Eine derartige Ausführungsform kann beispielsweise durch Verzicht auf einen kostenintensiveren miniaturisierten Laserprojektor kostengünstiger ausfallen.

In einer Weiterbildung der Erfindung kann vorgesehen sein, dass die Projektionsmittel mit einer Mehrzahl von Laserprojektoren ausgeführt ist. In diesem Zusammenhang ist es im Rahmen der Erfindung möglich, dass die Laserprojektoren derart angeordnet sind und derart zusammenwirken, dass das Projektionsbild aus von einzelnen Projektoren erzeugten Teilprojektionsbildern zusammengesetzt ist. Auf diese Art und Weise kann ein größeres Projektionsbild generiert werden, da mit einer Mehrzahl an Laserprojektoren auch die von diesen auf der Oberfläche abdeckbare Projektionsfläche größer wird. Die Datenverarbeitungsmittel müssen dann jeden Laserprojektor gesondert ansteuern und derart mit Bewegungsdaten versorgen, dass sich aus den einzelnen Teilprojektionsflächen Teilprojektionsbilder ergeben, welche zusammengesetzt ein im wesentlichen artefaktfreies Projektionsbild zeigen.

In einem besonderen Ausführungsbeispiel der Erfindung kann vorgesehen sein, dass die Projektionsmittel das Projektionsbild innerhalb einer Projektionsfläche auf die Oberfläche projizieren, wobei weiter sich die Projektionsfläche auf der Oberfläche korrespondierend zu der Änderung der gegenwärtigen Position des Bezugspunktes bewegt und wobei die Datenverarbeitungsmittel zum Erreichen der Orts- und Lagestabilität des Projektionsbildes auf der Oberfläche das Projektionsbild mit einer der Änderung der gegenwärtigen Position des Bezugspunktes entgegengesetzten Komplementärbewegung innerhalb der Projektionsfläche bewegen. Dieses Ausführungsform geht detaillierter auf die vorstehend allgemein angesprochene Eigenschaft der erfindungsgemäßen Vorrichtung ein, dass sich die Projektionsfläche auf Grund der Bewegung des wenigstens einen Laserprojektors mit der erfindungsgemäßen Vorrichtung auf der Oberfläche bewegt. Um nun zu vermeiden, dass sich das Projektionsbild der erfassten und verarbeiteten Positionsdaten mitbewegt, erfolgt die Komplementärbewegung des Projektionsbildes und somit die Kompensation der Vorrichtungsbewegung innerhalb des Projektionsbildes.

In einer Weiterbildung der Erfindung kann vorgesehen sein, dass die Datenverarbeitungsmittel mit einer Einrichtung zur Zeichenerkennung ausgebildet sind, welche die von den Positionserfassungsmitteln erfasste Änderung der gegenwärtigen Position des Bezugspunktes auf eine Übereinstimmung mit vorbestimmten Zeichen untersucht und dieser bei wesentlicher Übereinstimmung wenigstens ein Zeichen zuordnet. Somit ist es möglich, dass die erfindungsgemäße Vorrichtung mit dieser, insbesondere mit dem Bezugspunkt, geschriebene Schriftzeichen erkennt und weiterverarbeitet. Beispielsweise kann mit der erfindungsgemäßen Vorrichtung ein Text geschrieben werden. Dieser kann zeichenweise erkannt und weiterverarbeitet werden, beispielsweise abgespeichert oder als Befehl eines Bedienungsmenüs interpretiert werden.

In einer Weiterbildung der Erfindung kann vorgesehen sein, dass diese zur kabelgebundenen oder kabellosen Kommunikation mit einer entfernt angeordneten Basis ausgebildet ist. Die gespeicherten und erfassten Positionsdaten, insbesondere die erfassten Zeichen können dann an die Basis übertragen werden, so dass der vorstehend angesprochene mit der Vorrichtung niedergeschriebene Text an die Basis, beispielsweise einem Computer oder dergleichen, übertragen werden kann und dort im Rahmen eines Editors weiterverarbeite werden kann. Gleichermaßen ist es möglich, mittels der erfindungsgemäßen Vorrichtung Nachrichten, beispielsweise SMS (Short Message Service)-Nachrichten, zu verfassen und diese an die Basis zu versenden.

Ferner kann in einem Ausführungsbeispiel der Erfindung vorgesehen sein, dass die Vorrichtung Funkübertragungsmittel aufweist, insbesondere zur Übertragung der erfassten Bewegung oder/und der ermittelten Zeichen. Funkübertragungsmittel können beispielsweise auf dem GSM (Global System for Mobile Communication)-Standard, dem UMTS (Universal Mobile Telecommunication System)-Standard oder einem anderen Mobilfunkstandard beruhen. Auch ist es möglich, dass die Funkübertragungsmittel auf dem DECT (Digital European Cordless Telecommunications)-Standard oder dem Bluetooth-Standard oder auf einer IrDA-Schnittstelle beruhen.

Die Erfindung wird im Folgenden anhand der beiliegenden Figuren beispielhaft erläutert. Es stellen dar:
- Figur 1: eine perspektivische Ansicht eines ersten Ausführungsbeispiels der erfindungsgemäßen Vorrichtung;
- Figur 2: eine vergrößerte Ansicht des unteren Bereichs der Vorrichtung gemäß Figur 1;
- Figur 3: die Ansicht gemäß Figur 2 betrachtet aus einer anderen Perspektive;
- Figur 4: eine perspektivische Ansicht eines zweiten Ausführungsbeispiels der erfindungsgemäßen Vorrichtung;
- Figur 5: eine perspektivische Ansicht eines dritten Ausführungsbeispiels der erfindungsgemäßen Vorrichtung; und
- Figur 6: eine perspektivische Ansicht eines vierten Ausführungsbeispiels der erfindungsgemäßen Vorrichtung.

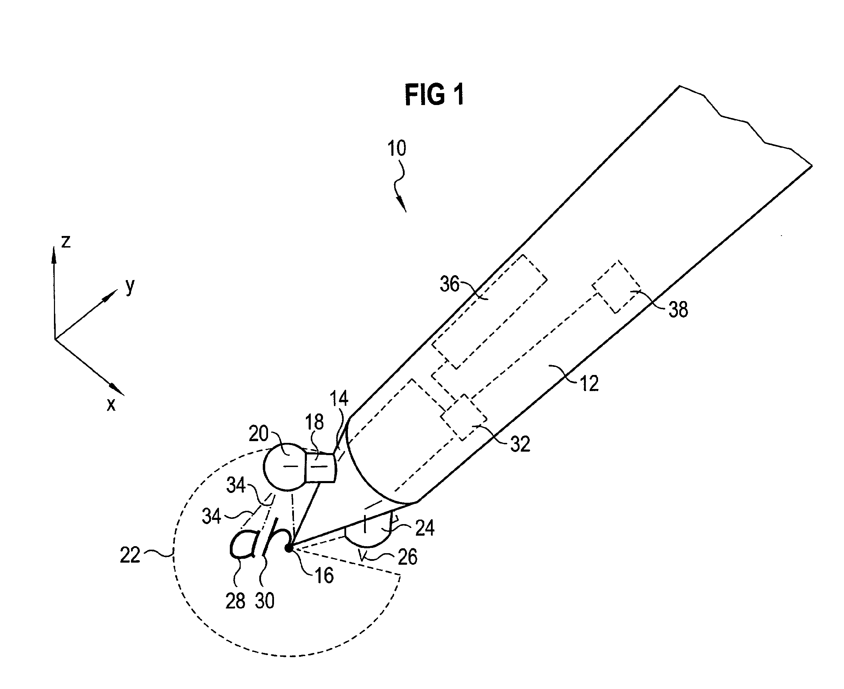

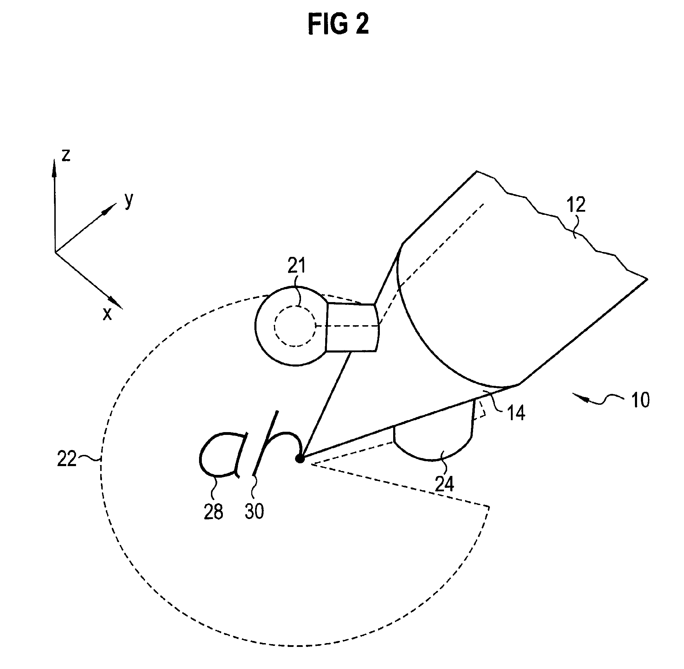

In den Figuren 1, 2 und 3 ist ein erstes Ausführungsbeispiel der erfindungsgemäßen Vorrichtung dargestellt, wobei die erfindungsgemäße Vorrichtung allgemein mit 10 bezeichnet ist. Diese ist als Stift ausgebildet und umfasst einen im Wesentlichen zylindrischen Schaft 12 sowie eine kegelförmige Spitze 14. Die kegelförmige Spitze ist an ihrem in den Figuren 1 bis 3 tiefstliegenden Punkt mit einem verschleißfesten Kugelkörper 16, beispielsweise aus Metall oder dergleichen, versehen. Der verschleißfeste Kugelkörper 16 hat einen kleinen Durchmesser, beispielsweise von 1mm, und sitzt fest auf der kegelförmigen Spitze 14.

An der kegelförmigen Spitze 14 ist ein erster Fortsatz 18 angeordnet, an dessen spitzenfernem Ende ein sphärischer Körper 20 angebracht ist. In dem sphärischen Körper 20 ist ein als Laserprojektor 21 ausgebildeter Beamer angeordnet, welcher auf einer von der X- und Y-Achse aufgespannten Oberfläche ein durch strichlierte Umrandung 22 eingegrenztes Projektionsfeld, dessen Größe sich durch den Öffnungswinkel α des Projektors bestimmt, durch Projektion abdecken kann. Ferner ist an der Spitze 14 der Vorrichtung 10 an einer zu der Anbringstelle des Fortsatzes 18 entgegengesetzten Seite ein zweiter Fortsatz 24 angeordnet, welcher bei der in Figur 1 gezeigten Schrägstellung der erfindungsgemäßen Vorrichtung im Raum im Wesentlichen orthogonal zu der von der X- und Y-Achse aufgespannten Oberfläche gerichtet ist. In dem Fortsatz 24 ist ein optischer Bewegungssensor 25 aufgenommen, der durch optische Messungen vermittels des Strahlengangs 26 Bewegungen der Vorrichtung 10, insbesondere des Kugelkörpers 16 auf der durch die X- und Y-Achse aufgespannten Oberfläche erfasst.

Die Vorrichtung funktioniert derart, dass der Schaft 12 mit seiner Spitze 14 und dem Kugelkörper 16 wie ein herkömmlicher Stift auf der von der X- und Y-Achse aufgespannten Ebene bewegt wird, um beispielsweise, wie in Figur 1 dargestellt, einzelne Buchstaben 28, 30 zu schreiben. Diese Bewegung des sphärischen Körpers 20 auf der durch die X- und Y-Achse aufgespannten Oberfläche wird durch den in dem Fortsatz 24 aufgenommenen Bewegungssensor 25 vermittels des Strahlengangs 26 in für einen optischen Sensor herkömmlicher Weise erfasst, beispielsweise durch Erfassung einer bewegungsabhängigen Veränderung der Oberflächenstruktur, und an eine Datenverarbeitungseinheit 32 übertragen. Diese verarbeitet die erfassten Positionsdaten, unterzieht diese verschiedenen Prozeduren, beispielsweise einer Zeichenerkennungs-Verarabeitungsprozedur und kommt - wie in dem in Figur 1 gezeigten Beispielsfall - zu dem Ergebnis, dass mit der mit stiftförmigen Vorrichtung 10 die Buchstaben "a" und "h" auf die von der X- und Y-Achse aufgespannte Oberfläche gezeichnet wurden.

Die Datenverarbeitungseinheit 32 gibt dann entsprechende Signale an den in dem sphärischen Körper 20 positionierten Projektor 21. Dieser projiziert, wie beispielhaft durch die Strahlen 34 dargestellt, die von der Datenverarbeitungseinheit 32 erfassten Buchstaben innerhalb der Projektionsfläche 22 auf die von X- und Y-Achse aufgespannte Oberfläche, so dass ein Benutzer den Eindruck erhält, dass er mit dem sphärischen Körper 20 auf die von der X- und Y-Ebene aufgespannte Oberfläche die Zeichen 28 und 30 geschrieben hätte. Bei jeder Bewegung der Vorrichtung 10, welche von den im Fortsatz 24 aufgenommenen Positionserfassungsmitteln 25 erfasst wird, werden die von der Datenverarbeitungseinheit 32 berechneten Daten derart dem in dem sphärischen Körper 20 untergebrachten Projektor 21 bereitgestellt, dass dieser trotz der Bewegung der Vorrichtung 10 die Zeichen 28 und 30 und ggf. weitere geschriebene Zeichen auf der von der X- und Y-Achse aufgespannten Oberfläche ortsstabil und lagestabil verharren. Mit anderen Worten wird die bei einer Schreibbewegung durchgeführte Verlagerung der stiftförmigen Vorrichtung 10 innerhalb der X-und Y-Ebene von in Figur 1 links nach rechts derart bei der Projektion berücksichtigt, dass trotz der korrespondierenden Bewegung des in dem sphärischen Körper 20 untergebrachten Projektors 21 und damit der korrespondierenden Bewegung des Projektionsfeldes 22 die Zeichen 28 und 30 auf der von der X-und Y-Achse aufgespannten Oberfläche orts- und lagestabil bleiben, so dass sich die Zeichen 28 und 30 innerhalb des Projektionsfeldes 22 entgegengesetzt zu der Bewegung der Vorrichtung 10 von links nach rechts in Richtung von rechts nach links bewegen.

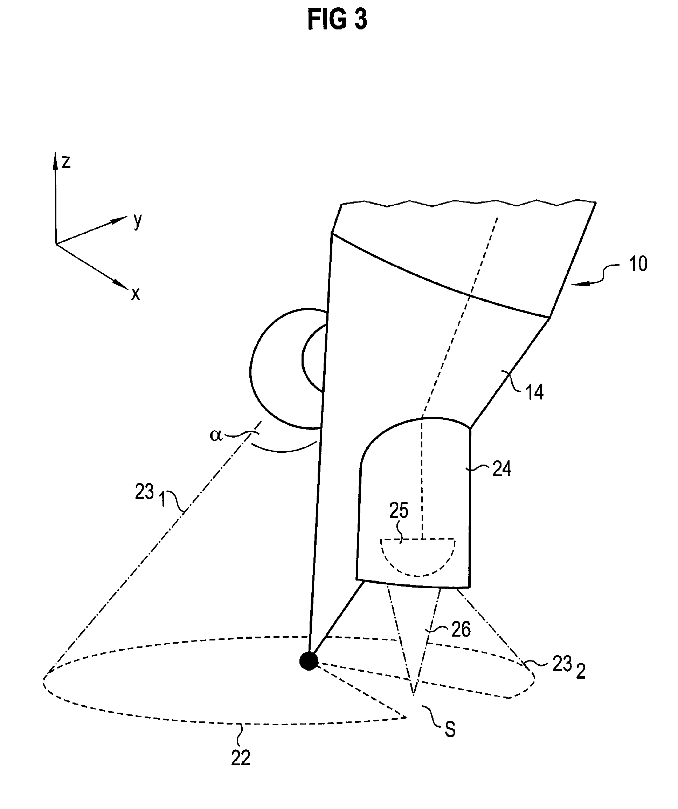

Figur 3 ist noch zu entnehmen, dass der Projektor 21 nur mit einem ganz bestimmten Öffnungswinkel α der äußersten Strahlen 23₁ und 23₂ projizieren kann, durch welche das Projektionsfeld, welches durch die Umrandung 22 begrenzt ist, definiert wird. Ferner ist Figur 3 deutlich zu entnehmen, dass die Spitze 14 einen kegelförmigen Schatten in die Projektionsfläche wirft, welcher Schatten von dem Projektor 21 nicht erreicht werden kann.

Ferner ist noch darauf hinzuweisen, dass die Vorrichtung 10 von einem Akkumulator 36 energetisch versorgt wird und ein mit der Datenverarbeitungseinheit verbundenes Funkmodul 38 zur Funkkommunikation, insbesondere Funkübertragung der erfassten Positionsdaten oder ermittelten Zeichen, mit einer Basistation aufweist.

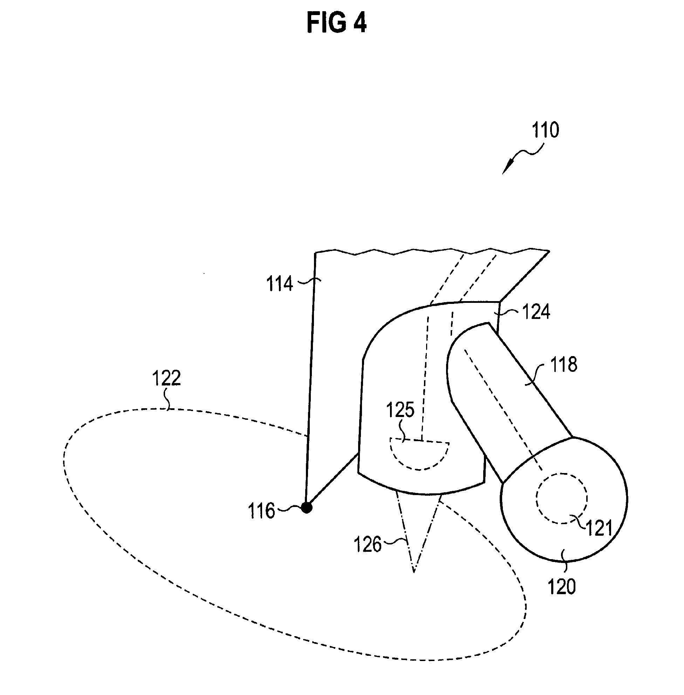

Figur 4 zeigt nun ein zweites Ausführungsbeispiel der vorliegenden Erfindung. Es werden dieselben Bezugszeichen wie vorangehend bei der Beschreibung des ersten Ausführungsbeispiels anhand der Figuren 1 bis 3 verwendet, jedoch mit der Ziffer 1 vorangestellt.

Zur Vermeidung von Wiederholungen werden lediglich die wesentlichen Unterschiede zu dem ersten Ausführungsbeispiel beschrieben. Der in Figur 4 gezeigte Ausschnitt der erfindungsgemäßen Vorrichtung 110 zeigt lediglich einen Teil der Spitze 114, welche, wie mit Bezug auf Figur 1 bereits erläutert, den Fortsatz 124 trägt. In diesem Fortsatz ist entsprechend dem ersten Ausführungsbeispiel gemäß der Figuren 1 bis 3 der Positionserfassungssensor 125 aufgenommen. Von diesem Positionserfassungssensor 125 gehen die Strahlen 126 zur Positionserfassung aus. Im Unterschied zu dem mit Bezug auf die Figuren 1 bis 3 beschriebenen ersten Ausführungsbeispiel ist der Fortsatz 118 nicht unmittelbar an der Spitze 114 an einer im Fortsatz 124 entgegengesetzten Stelle angebracht, sondern an dem Fortsatz 124 selbst angebracht. Dadurch wird erreicht, dass der Fortsatz 118 sowie der an dessen freien Ende angebrachte sphärische Körper 120, in welchem der Projektor 121 positioniert ist, nicht die Sicht auf die in dem Projektionsfeld 122 geschriebenen Zeichen verdeckt. Vielmehr liegen sowohl der Fortsatz 124 als auch der Fortsatz 118 mit seinem sphärischen Körper 120 in einem Bereich, welcher bei Schrägstellung der erfindungsgemäßen Vorrichtung 110 ohnehin von der Spitze 114 und dem nicht gezeigten Schaft bedeckt ist, so dass ein Nutzer dieselbe, allein durch die Stiftabmessungen geringfügig eingeschränkte Sicht auf die zu beschreibende Oberfläche hat, wie dies bei einem herkömmlichen Schreibstift der Fall ist.

Die Funktionsweise der erfindungsgemäßen Vorrichtung gemäß dem zweiten Ausführungsbeispiel - wie in Figur 4 gezeigt - entspricht im Wesentlichen der Funktionsweise gemäß dem ersten Ausführungsbeispiel. Es sei jedoch darauf hingewiesen, dass durch die Art der Anbringung des Fortsatzes 118 mit dem den Projektor 121 tragenden sphärischen Körper 120 sich gegenüber dem ersten Ausführungsbeispiel veränderte Verhältnisse hinsichtlich des Schattenwurfs ergeben. Bei der in Figur 4 gezeigten Ausführungsform ist ein gegenüber dem ersten Ausführungsbeispiel gemäß der Figuren 1 bis 3 verringerter Schattenwurf innerhalb des Projektionsfeldes 122 durch die Spitze 114 zu erwarten.

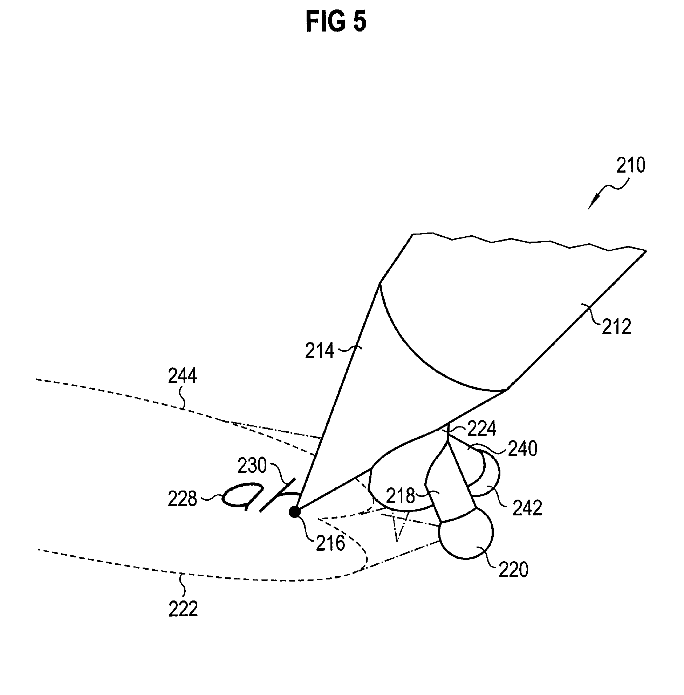

Figur 5 zeigt nun ein drittes Ausführungsbeispiel der vorliegenden Erfindung, welches sich an dem Ausführungsbeispiel, wie es in Figur 4 gezeigt ist, anlehnt. Wiederum werden dieselben Bezugszeichen wie für die Beschreibung der Ausführungsbeispiele gemäß der Figuren 1 bis 4 verwendet, jedoch mit der Ziffer 2 vorangestellt.

Der Unterschied zu dem Ausführungsbeispiel gemäß Figur 4 liegt darin, dass an dem Fortsatz 224, welcher sich von Spitze 214 aus in Richtung nach unten erstreckt, neben dem Fortsatz 118 mit seinem sphärischen Körper 220 ein weiterer Fortsatz 240 mit einem weiteren sphärischen Körper 242 angeordnet ist, wobei in dem sphärischen Körper 242 ein weiterer Projektor aufgenommen ist. Die beiden Fortsätze 220 und 240 sind derart an dem Fortsatz 224 angebracht, dass ihre Längsachsen einen spitzen Winkel miteinander einschließen. Dadurch wird erreicht, dass die beiden den sphärischen Körpern 220 und 242 zugeordneten Projektoren (nicht gezeigt) zwei Projektionsfelder erzeugen, deren Grenzen in Figur 5 durch die beiden Linien 222 und 244 teilweise dargestellt sind. Diese beiden Projektionsflächen bilden Teilflächen einer Projektionsgesamtfläche, die zur Darstellung des Projektionsbildes, insbesondere zur Darstellung der Zeichen 228 und 230 genutzt werden kann. Die beiden Projektionsteilflächen überlappen sich teilweise. Der Vorteil des in Figur 5 gezeigten Ausführungsbeispiels liegt darin, dass die von den Projektionsteilflächen gebildete Gesamtprojektionsfläche größer ist als dies mit einem einzigen Projektor möglich ist, und dass somit ein großflächigeres Projektionsbild und letztendlich eine größere Zeichenzahl dargestellt werden kann.

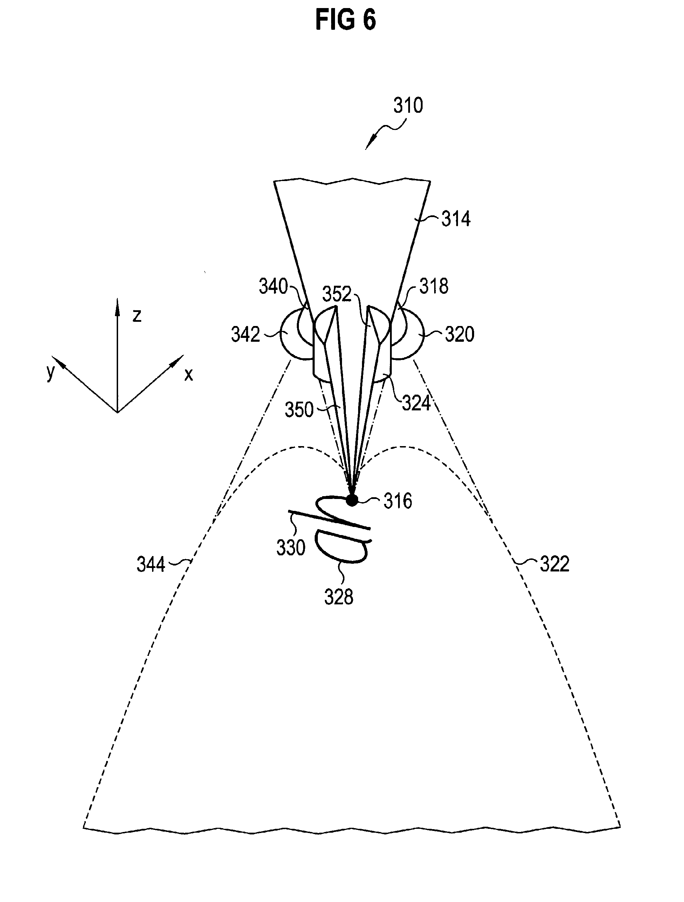

Figur 6 zeigt nun ein viertes Ausführungsbeispiel der vorliegenden Erfindung, welches sich an das dritte Ausführungsbeispiel gemäß Figur 5 anlehnt. Wiederum werden dieselben Bezugszeichen wie in der vorangehenden Beschreibung verwendet, jedoch mit der Ziffer 3 vorangestellt.

Die Darstellung gemäß Figur 6 entspricht einer perspektivischen Ansicht in Schreibrichtung. Wiederum ist nur die Spitze 314 der erfindungsgemäßen Vorrichtung 310 gezeigt. Der Unterschied zu der in Figur 5 gezeigten dritten Ausführungsform liegt bei der in Figur 6 gezeigten vierten Ausführungsform darin, dass der untere Teil der Spitze 314 durch Aussparungen 350 und 352 volumenreduziert wurde, so dass der Schattenwurf durch die Spitze 314 innerhalb des Gesamtprojektionsfeldes - definiert durch die Linien 322 und 344 - kleiner wird.

Die Funktionsweise des Ausführungsbeispiels gemäß Figur 6 entspricht der des Ausführungsbeispiels gemäß Figur 5, das heißt, es werden mit zwei Projektoren, die in den sphärischen Körpern 320 und 342 aufgenommen sind, zwei Teilprojektionsflächen erzeugt, die eine Gesamtprojektionsfläche ergeben.

## Patentansprüche

1. Vorrichtung (10; 110; 210; 310) zum Erfassen und Darstellen von Bewegungen, umfassend:
- Positionserfassungsmittel (24; 125) zum Erfassen der gegenwärtigen Position eines Bezugspunkts (16; 116; 216; 316) der Vorrichtung (10; 110; 210; 310),
- Datenverarbeitungsmittel (32) zum Verarbeiten von mit den Positionserfassungsmittel (25; 125) erfassten Positionsdaten und
- Projektionsmitteln (21; 121) zum Projizieren eines Projektionsbildes (28; 30) der erfassten und verarbeiteten Positionsdaten auf eine Oberfläche (XY-Ebene),
wobei die Datenverarbeitungsmittel (32) eine Änderung der gegenwärtigen Position des Bezugspunktes (16; 116; 216; 316) derart berücksichtigen, dass das Projektionsbild (28, 30) auf der Oberfläche (XY-Ebene) im Wesentlichen orts- und lagestabil bleibt.

2. Vorrichtung (10; 110; 210; 310) nach Anspruch 1,
wobei diese in Form eines Stiftes ausgeführt ist.

3. Vorrichtung (10; 110; 210; 310) nach Anspruch 2,
wobei der Bezugspunkt (16; 116; 216; 316) von einer Stiftspitze, insbesondere von einer druckstabilisierten Stiftspitze, gebildet ist.

4. Vorrichtung (10; 110; 210; 310) nach Anspruch 3,
wobei die Positionserfassungsmittel (25; 125) oder/und die Projektionsmittel (21; 121) an einer der Stiftspitze nahen Stelle der Vorrichtung (10; 110; 210; 310) angeordnet sind.

5. Vorrichtung (10; 110; 210; 310) nach einem der vorangehenden Ansprüche,
wobei die Positionserfassungsmittel mit wenigstens einem optischen Sensor (25; 125) oder/und mit wenigstens einem mechanischen Sensor oder/und mit wenigstens einem Beschleunigungssensor, oder/und mit einer Kombination dieser Sensoren ausgeführt sind.

6. Vorrichtung (10; 110; 210; 310) nach Anspruch 5,
wobei der wenigstens eine optische Sensor (25; 125) als optischer Bewegungssensor zur Erfassung einer translatorischen Bewegung des Bezugspunktes (16; 116; 216; 316) ausgeführt ist.

7. Vorrichtung (10; 110; 210; 310) nach Anspruch 5 oder 6,
wobei der wenigstens eine optische Sensor (25; 125) zur Erfassung einer rotatorischen Bewegung um eine sich durch den Bezugspunkt (16; 116; 216; 316) erstreckende Achse ausgeführt ist.

8. Vorrichtung (10; 110; 210; 310) nach einem der Ansprüche 5 bis 7,
wobei der wenigstens eine mechanische Sensor als Rollsensor zur Erfassung einer Abrollbewegung auf der Oberfläche ausgeführt ist.

9. Vorrichtung (10; 110; 210; 310) nach einem der Ansprüche 5 bis 8,
wobei der wenigstens eine Beschleunigungssensor als Drehwinkel-Beschleunigungssensor oder als Longitudinal-Beschleunigungssensor zur Erfassung einer Beschleunigung des Bezugspunktes der Vorrichtung ausgeführt ist.

10. Vorrichtung (10; 110; 210; 310) nach einem der vorangehenden Ansprüche,
wobei die Datenverarbeitungsmittel (32) einen Mikroprozessor umfassen.

11. Vorrichtung (10; 110; 210; 310) nach einem der vorangehenden Ansprüche,
wobei die Projektionsmittel (21; 121) mit wenigstens einem Laserprojektor ausgeführt sind.

12. Vorrichtung (10; 110; 210; 310) nach Anspruch 11, insbesondere nach den Ansprüchen 3 und 11,
wobei der wenigstens eine Laserprojektor (21; 121) an einer dem Bezugspunkt, insbesondere der Stiftspitze (10; 110; 210; 310), nahen Stelle angeordnet ist.

13. Vorrichtung nach Anspruch 11, insbesondere nach den Ansprüchen 3 und 11,
wobei der Laserprojektor an einer dem Bezugspunkt, insbesondere der Stiftspitze, fernen Stelle angeordnet ist und wobei dem Laserprojektor ein optisches Übertragungssystem, insbesondere eine Linsenanordnung oder/und Lichtleitmittel oder/und Spiegelanordnungen oder dergleichen, zur Projektion des Projektionsbildes auf die Oberfläche zugeordnet ist.

14. Vorrichtung (210; 310) nach einem der Ansprüche 11 - 13,
wobei die Projektionsmittel mit einer Mehrzahl von Laserprojektoren ausgeführt ist.

15. Vorrichtung (210; 310) nach Anspruch 14,
wobei die Laserprojektoren derart angeordnet sind und zusammenwirken, dass das Projektionsbild aus von einzelnen Projektoren erzeugten Teilprojektionsbildern (222, 244; 322, 344) zusammengesetzt ist.

16. Vorrichtung (10; 110; 210; 310) nach einem der vorangehenden Ansprüche,
wobei die Projektionsmittel (21; 121) das Projektionsbild (28, 30) innerhalb einer Projektionsfläche auf die Oberfläche (XY) projizieren, wobei weiter sich die Projektionsfläche (22) auf der Oberfläche (XY) korrespondierend zu der Änderung der gegenwärtigen Position des Bezugspunktes (16; 116; 216; 316) bewegt und wobei die Datenverarbeitungsmittel (32) zum Erreichen der Orts- und Lagestabilität des Projektionsbildes (28, 30) auf der Oberfläche (XY) das Projektionsbild (28, 30) mit einer der Änderung der gegenwärtigen Position des Bezugspunktes (16) entgegengesetzten Komplementärbewegung innerhalb der Projektionsfläche bewegen.

17. Vorrichtung (10; 110; 210; 310) nach einem der vorangehenden Ansprüche,
wobei die Datenverarbeitungsmittel (32) mit einer Einrichtung zur Zeichenerkennung ausgebildet sind, welche die von den Positionserfassungsmitteln (25) erfasste Änderung der gegenwärtigen Position des Bezugspunktes (16) auf eine Übereinstimmung mit vorbestimmten Zeichen untersucht und dieser bei wesentlicher Übereinstimmung wenigstens ein Zeichen zuordnet.

18. Vorrichtung (10; 110; 210; 310) nach einem der vorangehenden Ansprüche, insbesondere nach Anspruch 17,
wobei diese zur kabelgebundenen oder kabellosen Kommunikation mit einer entfernt angeordneten Basis ausgebildet ist.

19. Vorrichtung (10; 110; 210; 310) nach Anspruch 18, wobei diese Funkübertragungsmittel (38) aufweist, insbesondere zur Übertragung der erfassten Bewegung oder/und der ermittelten Zeichen.
